# EUROPÄISCHE PATENTANMELDUNG

(11) **EP 1 352 858 A2**
(43) Veröffentlichungstag der Anmeldung: **15.10.2003**
(21) Anmeldenummer: 03008196.2
(22) Anmeldetag: 08.04.2003
(51) Int. Cl.: B65G 47/96

(54) **Sortieranlage mit kippbaren Fördergutträgern**

(30) Priorität: 08.04.2002 DE 20205395 U
(71) Anmelder: WF Logistik GmbH, 86899 Landsberg (DE)
(72) Erfinder: Sühling Winfried, 33615 Bielefeld (DE); Ramsbrock Torsten, 33729 Bielefeld (DE)
(74) Vertreter: Tiesmeyer, Johannes, Dr.

(57) **Zusammenfassung**

Sortieranlage, insbesondere für Stückgut. Die Sortieranlage hat schaltbare Abgabemechanismen (44,45), eine Rückstelleinrichtung und endlos gelenkig aneinander gereihte Mitnehmer (1), die mit einem um eine Achse (2) drehbar gelagerten Tray (27) ausgestattet sind. Das Tray bildet mit dem Unterbau (28) einen Fördergutträger, welche Auslösekufen (32,33) hat. Die Abgabemechanismen (44 und 45) besitzen je eine Entriegelungskufe (41) und eine Auslöserolle (42), die über eine Platte (40) gekuppelt sind und die über Gelenkpunkte (39), die eine Drehachse parallel zur Förderrichtung bilden, eine Schwenkbewegung ausführen.

## Beschreibung

Die Erfindung betrifft eine Sortieranlage für Fördergut, insbesondere Stückgut, nach dem Oberbegriff des Anspruchs 1.

Stückgutsortierförderer, sogenannte Traysorter, haben die Aufgabe, Stückgüter wie Kartons nach festgelegten Kriterien auf Abgaben zu verteilen. Die Sorter sind im Allgemeinen als Kreisförderer ausgebildet und besitzen mindestens zwei Abgaben bzw. Entladestellen und mindestens eine Rückstelleinrichtug.

Es sind Lösungen verschiedenster Art bekannt. Es existieren Traysorter, die als Hängeförderer ausgeführt sind. Die einzelnen Trays (Fördergutträger) sind durch eine Rahmenkonstruktion hängend ausgeführt, ein Grundfördersystem befindet sich oberhalb des Trays und eine Schiene zur Führung des Mitnehmers unterhalb. Nachteilig an dieser Lösung ist zum einen, dass eine Verbindung zwischen Führung und Grundfördersystem geschaffen werden muss, die sowohl das Zuführen als auch das Abgeben der Ware behindert. Die Anbindung des Trays an das Grundfördersystem kostet Baulänge, so dass nicht der gesamte Mitnehmerabstand als Ladelänge zur Verfügung steht.

Bekannt sind außerdem Lösungen, bei welchen der Mitnehmer Auslöserollen besitzt, die von einer schaltbaren Kufe ausserhalb des Mitnehmers betätigt werden. Da gleichzeitig die Mitnehmer auch entriegelt werden müssen, ist für einen Abgabevorgang grosse Masse zu bewegen. Dadurch ist einerseits die Dynamik des Abgabevorgangs begrenzt, andererseits sind die erforderlichen leistungsstarken Antriebe teuer.

Es ist auch eine Lösung bekannt, die unter Ausnutzung der Schwerkraft und mit zusätzlichen Federn arbeitet. Mit diesem Prinzip kann man jedoch nur auf einer Seite abgeben. Damit sind jedoch die Einsatzmöglichkeiten begrenzt.

Es gibt weiterhin Traysorter, die mit einem Tragschienensystem unterhalb des Trays arbeiten. Die Auslösung des Trays geschieht durch ein System von Hebeln, Schiebern und einer Linearbewegung. Diese Lösung ist sehr elegant und führt zu sehr guten Ergebnissen, ist jedoch sehr teuer.

Es ist ein weiterer Traysorter bekannt, der als Hängesorter mit den bekannten Nachteilen ausgelegt ist. Er besitzt die Auslösekufe direkt unter dem Tray und eine Schaltrolle an der unteren Führung, die über eine Lasche zusätzlich eine lange Entriegelungskufe betätigt. Die Schaltrolle ist über einen Hebel mit einer Drehachse senkrecht zur Förderrichtung gelagert. Als Stellglied wird ein Pneumatikzylinder benutzt. Nachteilig ist hier, dass die Auslöserolle einen sehr weiten Weg in einer sehr kurzen Zeit zurücklegen muss. Dies begrenzt die Geschwindigkeit des Sortiersystems und führt zu hohen mechanischen Belastungen der Abgabemechanik mit entsprechender Geräuschentwicklung.

Aufgabe der Erfindung ist es, eine verbesserte Fördereinrichtung in Gestalt eines Sortierförderers mit insbesondere beidseitig kippbaren Fördergutmitnehmern zu schaffen, der beidseitig be- und entladefähig ist, der einen einfachen Aufbau besitzt und eine hohe Sortierleistung erreicht.

Diese Aufgabe wird erfindungsgemäß mit den Merkmalen des Anspruchs 1 gelöst.

Vorteilhafte Weiterbildungen der Erfindung sind in den Unteransprüchen angegeben.

Die hier vorgestellte Sortieranlage bietet in den diversen Ausführungsmöglichkeiten vielfältige Vorteile. Sie bietet beidseitige Be- und Entlademöglichkeit und durch unterhalb des Trays (Fördergutträgers) angebrachte Laufwerke besteht die Möglichkeit, bei übermäßig langen Stückgütern diese auf zwei Trays zu legen. Die Entlademechanik ist so ausgelegt, dass nur geringe Stellbewegungen für Entladeschalter und Entriegelungsschalter erforderlich sind und diese Stellbewegungen auch nur an Bauteilen mit kleinen Trägheitsmomenten. Somit wird es erstmals möglich, bei einem vollwertigen Traysorter mit preiswerten Stellgliedern, die trotzdem kurze Stellzeiten aufweisen, zu arbeiten.

Vorteilhaft ist auch, dass die Fördergutmitnehmer hauptsächlich aus einfachen kostengünstigen Bauteilen bestehen, die ohne aufwendige Werkzeuge zu fertigen sind; weitere nötige Bauteile sind problemlos über Zulieferer als Standardteile verfügbar.

Durch eine Raste pro Seite bzw. Rastverriegelung pro Entladeschwenkstellung ist eine hohe Betriebssicherheit der Fördergutmitnehmer gewährleistet.

Ein beidseitig wirkender Bremszylinder oder Schwingungsdämpfer verhindert unkontrollierte Bewegungen nach dem Entriegeln und erlaubt es, einfache, nur einseitig wirkende Steuerkonturelemente in Form von Ablaufkufen direkt unter den Trays (Fördergutträgern) zu verwenden.

Ein wesentlicher Vorteil dieser Konstruktion besteht darin, dass z.B. sowohl ein Entriegelungsnocken als auch eine Auslöserolle sich an einem gemeinsamen Bauteil befinden können und damit von diesem gleichzeitig und mit dem gleichen Stellglied betätigt werden können.

Ausführungsbeispiele der Erfindung sind in den Zeichnungen dargestellt und im folgenden näher beschrieben. Es zeigen
- Figur 1:: eine Seitenansicht auf die Tragkonstruktion eines Fördergutmitnehmers und einen vollständigen Fördergutmitnehmer,
- Figur 2:: einen Schnitt durch zwei Fördergutmitnehmer unterhalb des Rohres in Draufsicht,
- Figur 3:: einen Schnitt im Bereich der Entladestelle, EntladeschalterEntriegelungsschalter unbetätigt,
- Figur 4:: einen Schnitt im Bereich der Entladestelle, EntladeschalterEntriegelungsschalter betätigt, Tray noch nicht ausgelenkt,
- Figur 5:: einen Schnitt im Bereich der Entladestelle, EntladeschalterEntriegelungsschalter betätigt, Tray ausgelenkt,
- Figur 6:: einen Schnitt im Bereich des Rückstellortes zur Darstellung der Rückstelleinrichtung,
- Figur 7:: einen Schnitt im Bereich des Dämpfungselementes.

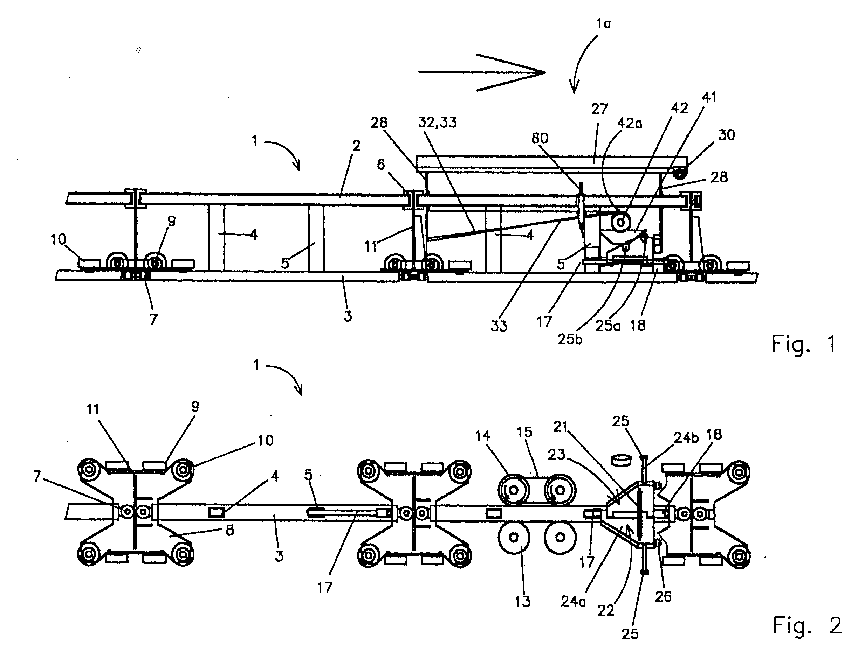

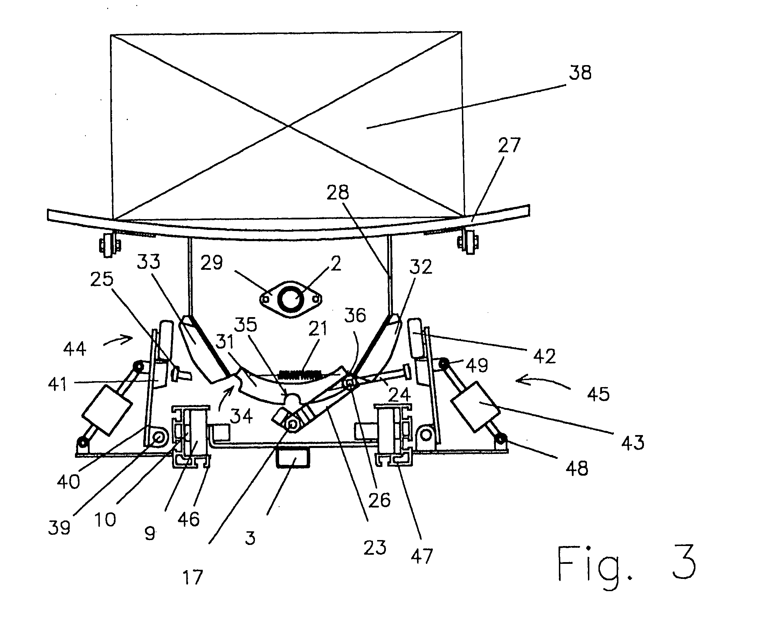

In Fig. 1 und 2 sind zwei Fördergutmitnehmer 1 des erfindungsgemässen Fördersystems gezeigt. Der linke Mitnehmer 1 ist ohne Tray, Entladesteuerkonturelementen und Rastmechanismus gezeichnet, damit das Fahrgestell besser erkennbar ist. Das Fahrgestell des Mitnehmers besteht im Wesentlichen aus dem Rundrohr 2, der Strebe 3 und den Stegen 4 und 5, die das Gestell bilden, sowie dem Chassis 8, an dem die Tragrollen 9 und die Führungsrollen 10 und das Trägerblech 11 befestigt sind. Die Tragrollen 9 und die Führungsrollen 10 laufen in Führungsschienen 46 und 47. An den Enden der Strebe 3 sind beidseitig Gelenke 7 angebracht, die wiederum an dem Chassis 8 befestigt sind. So ist es möglich mit den einzelnen Wagen 1 einen geschlossenen Kreisförderer zu realisieren, der über die Reibrollen 14, die über eine Kette 15 gekuppelt sind, und die Gegenrollen 13 angetrieben wird. An den Trägerblechen 11 sind oben beidseitig Kunststofflager 6 befestigt, die sowohl Längsbewegungen als auch Winkelbewegungen des Rohres 2 zulassen. Oben auf der Strebe 3 befindet sich der Klotz 18, der zusammen mit einer Bohrung im Steg 5 die Aufnahme für die Achse 17 bildet. Um die Achse 17 sind unabhängig voneinander zwei Verriegelungsklappen 22 und 23 drehbar gelagert. Sie bestehen im Wesentlichen aus dem Grundkörper 24a, an dessen Verlängerungen 24b die Rollen 25 angebracht sind. Die Zugfeder 21 verspannt beide Klappen 22, 23 gegeneinander, so dass die Rastrollen 26 gegen die Ausformungen bzw. Wände der Rastausnehmungen 34 und 36 der Raste 31 Druck ausüben (Fig.3). In Fig. 3 ist der Fördergutmitnehmer im Querschnitt bzw. in Vorderansicht dargestellt. Das Tray 27 ist über den Grundkörper 28 mit Hilfe des Lagers 29 drehbar um das Rohr 2 gelagert. Am Grundkörper 28 ist die Raste 31 mit den Ausformungen 34, 35 und 36 und beidseitig die Ablaufkufen 32 und 33 als Entladesteuerkonturelemente befestigt. Sie bilden Rampen für die als Entladesteuerkonturgegenelemente wirksamen Auslöserollen 42 der Abgabemechanismen 44 und 45, welche einen Entladeschalter und einen Entriegelungsschalter in einer Schaltereinheit umfassen. Ein Abgabemechanismus besteht aus einer Platte 40 mit Gelenkpunkten 39, bei der am oberen Ende die Entriegelungskufe 41 als Entriegelungssteuerkonturelement sowie die Auslöserolle 42 als Entladesteuerkonturgegenelement befestigt sind. Die Gelenkpunkte 39 bilden eine Achse, um die die Platte 40 mit der Entriegelungskufe 41 und der Auslöserolle 42 schwenkbar ist. Über das Gelenk 49 ist das Stellglied 43 angeschlossen, welches am unteren Ende wiederum drehbar durch ein Gelenk 48 gelagert ist, welches ortsfest in Bezug auf die Führungsschiene 47 ist.

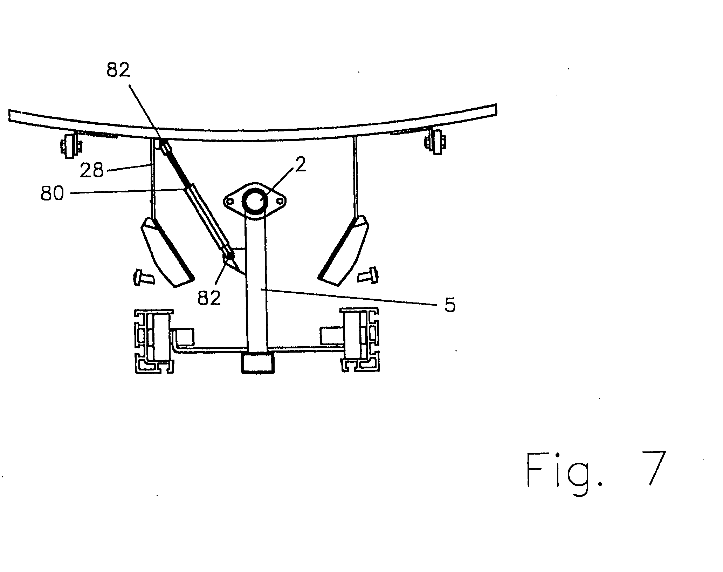

Fig. 7 zeigt ein Brems- beziehungsweise Dämpfungselement 80, welches einerseits über die Lagerstelle 81 am Steg 5 und auf der anderen Seite über die Lagerstelle 82 am Grundkörper 28 befestigt ist.

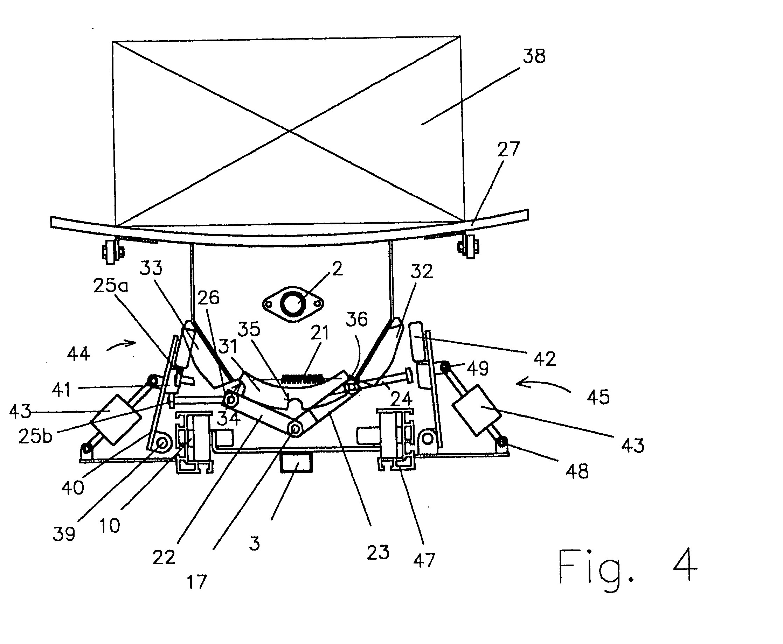

Im Folgenden wird das Abgeben eines Stückgutes 38 anhand Fig. 4 beschrieben. Ein erfindungsgemäßer Fördergutmitnehmer 1 nähert sich dem Abgabemechaninismus 44, wo das Tray 27 des Mitnehmers 1 ausgelenkt werden soll, um das Stückgut 38 abzugeben. Fig. 4 zeigt den Abgabemechanismus 44 im ausgelenkten (seitlich nach innen verschwenkten) Zustand. Die Platte 40 mit der Auslöserolle 42 und der Entriegelungskufe 41 ist in Arbeitsposition. Zunächst berührt die als Entriegelungssteuerkonturgegenelement wirksame Rolle 25 die Entriegelungskufe 41 an der Position 25a. Bewegt sich der Mitnehmer 1 nun weiter (Fig. 1), so wird die Rolle 25 aufgrund der Steuerkonturauslenkung entlang der Kufe 41 in Position 25b bewegt. Dies führt dazu, dass die Verriegelungsklappe 22 um die Drehachse 17 ausgelenkt wird und damit sich auch die Rastrolle 26 aus der Ausformung 34 der Raste 31 entfernt. Durch diesen Vorgang ist das Tray 27 entriegelt und kann über die Ablaufkufe 33, die über den Grundkörper 28 mit dem Tray 27 agiert, ausgelenkt werden. Hierbei dient das Rohr 2 als Drehachse. Das in Fig. 7 gezeigte Dämpfungselement 80, welches beidseitig wirkt, sorgt für eine Gegenkraft, die verhindert, dass das Tray 27 nach dem Entriegeln bei aussermittiger Belastung durch das Fördergut schlagartig ohne Kontakt mit der Ablaufkufe 33 umschlägt (Fig.7).

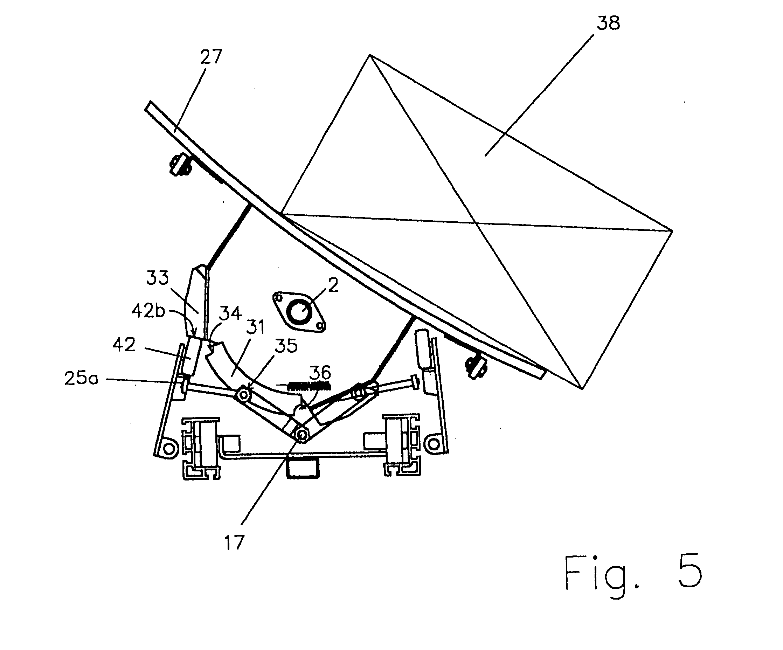

Am Ende des Abgabevorgangs, wenn die Auslöserolle 42 die Position 42b auf der Ablaufkufe 33 erreicht hat, rastet die Rastrolle 26 in der Ausformung 35 der Raste 31 ein und verriegelt das Tray 27 im ausgelenkten Zustand. Fig. 5 zeigt einen ausgelenkten Mitnehmer 1 in diesem Zustand; das Stückgut 38 ist im Begriff, unter der Wirkung der Schwerkraft vom Tray abzurutschen. Der Abgabemechaninismus 44 wird in die Ruheposition zurückgeschwenkt, damit nicht ein nachfolgender Mitnehmer 1 ungewollt ausgelöst wird. Der Abgabevorgang für die andere Abgabeseite erfolgt analog; dazu wird statt dem Abgabemechanismus 44 der Abgabemechanismus 45 durch das Stellglied 43 eingeschwenkt.

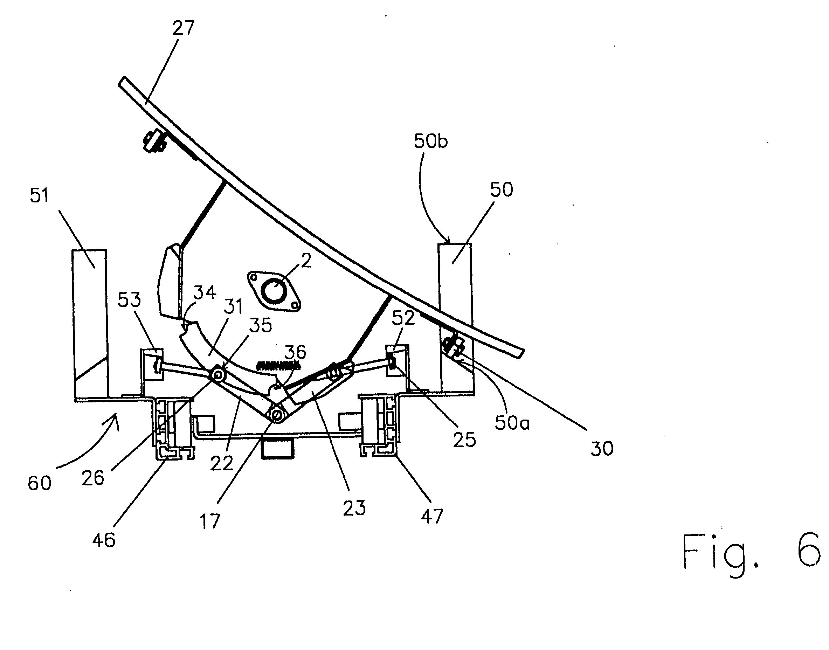

Bevor nun der Mitnehmer 1 neu beladen werden kann, muss er in die Ausgangsposition nach Fig.3 zurückgestellt werden. Fig. 6 zeigt die Bauteile, die dafür erforderlich sind. Die Rückstelleinrichtung 60 besteht im Wesentlichen aus den Rückstellkufen (Rückstellsteuerkonturelemente) 50 und 51 sowie den Entriegelungskufen (Entriegelungssteuerkonturelemente) 52 und 53, die ortsfest in Bezug auf die Führungsschienen 46 und 47 sind.

Da der Mitnehmer 1 im ausgelenkten Zustand verriegelt ist, wird zunächst die Verriegelungsklappe 22, die in diesem Fall der aktiven Kufe gegenüberliegt, über die Entriegelungskufe 53 gegen den Uhrzeigersinn ausgelenkt und so die Rastrolle 26 aus dem Bereich 35 der Raste 31 entfernt. Der Mitnehmer 1 ist nun entriegelt und kann über das Rohr 2, welches als Drehgelenkelement dient, zurückgestellt werden. Dies geschieht mit Hilfe der Rückstellrollen 30, die beidseitig an der Vorderkante des Trays 27 angebracht sind. Die Rückstellrolle 30 setzt an der Position 50a auf. Im weiteren Verlauf des Vorgangs wird die Position 50b erreicht, das Tray 27 ist dann waagerecht ausgerichtet. Zum Schluss fällt die Rastrolle 26 hinter die Ausformung 34 der Raste 31, das Tray ist nun wieder bereit, neue Ware aufzunehmen.

Der Abgabevorgang bzw. Entladevorgang, der Rückstellvorgang und der Entriegelungsvorgang erfolgen durch Steuerkonturauslenkung, wobei jeweils zwischen einer Steuerkontur und einem in den Weg der Steuerkontur gelangenden Gegenelement bei der Mitnehmerbewegung das Steuerkonturelement oder das Gegenelement (je nachdem, welches einen betreffenden Bewegungsfreiheitsgrad hat) eine Ausweich-Bewegung, nämlich vorliegendenfalls eine Schwenkbewegung ausführt. In dem gezeigten Ausführungsbeispiel erfolgt der Entladevorgang, indem das Steuerkonturelement 33 oder 32 bei Beaufschlagung durch eine der Rollen 42 (Steuerkonturgegenelement 42) die Ausweich-Bewegung durchführt, indem es zu einem Verschwenken des Fördergutträgers 27, 28 um die Achse 2 kommt.

Bei dem Entriegelungsvorgang hat nicht das Steuerkonturelement 41 den Ausweichfreiheitsgrad, sondern das Steuerkonturgegenelement 25. Es können im Rahmen der Erfindung Lösungen mit kinematischer Umkehrung gefunden werden.

Die Erfindung kann unter einem Aspekt folgendermaßen umschrieben werden: Es handelt sich um eine Sortieranlage, insbesondere für Stückgut. Die Sortieranlage hat schaltbare Abgabemechanismen 44, 45, eine Rückstelleinrichtung (vgl. Fig. 6) und endlos gelenkig aneinander gereihte Mitnehmer 1, die mit einem um eine Achse 2 drehbar gelagerten Tray 27 ausgestattet sind. Das Tray bildet mit dem Unterbau 28 einen Fördergutträger, welche Auslösekufen 32, 33 hat. Die Abgabemechanismen 44 und 45 besitzen je eine Entriegelungskufe 41 und eine Auslöserolle 42, die über eine Platte 40 gekuppelt sind und die über Gelenkpunkte 39, die eine Drehachse parallel zur Förderrichtung bilden, eine Schwenkbewegung ausführen.

Die Entriegelungsklappen 22 und 23 besitzen eine gemeinsame Achse und können über die Entriegelungskufe 41 und eine Auslöserolle 25 nach unten bewegt werden.

Die Raste 31 hat drei nach unten offene Ausformungen 34, 35, 36, die über die Zugfeder 21 und die Rastrolle 26 mit einer Kraft beaufschlagt werden. Die Zugfeder 21 erstreckt sich zwischen den beiden von der gemeinsamen Schwenkachse 17 abstehenden Enden der Entriegelungsklappen 22 und 23. Die Entriegelungsrollen 25 sind senkrecht zu dieser Drehachse 17 angeordnet. Die Rastrollen 26 sind parallel zu der Achse 17 angeordnet. Die Auslöserolle 42 ist vorzugsweise senkrecht zur Schwenkachse 39 angebracht. Die Entriegelungskufen 41 bilden abfallende Rampen. Die Rückstellkufen 50, 51 bilden ansteigende Rampen, über die mit Rückstellrollen 30 das Tray 27 zurückgestellt wird. Ein Dämpfungselement 80 ist vorgesehen, welches eine Gegenkraft zur Auslenkung des Trays 27 aufbauen kann.

## Patentansprüche

1. Sortieranlage für Fördergut, insbesondere für Stückgut, bei der insbesondere gelenkig und vorzugsweise endlos aneinander gereihte Fördergutmitnehmer (1) längs einer Förderstrecke geführt bewegbar sind, wobei die Fördergutmitnehmer (1) jeweils einen zwischen einer Transportstellung und wenigstens einer Entladestellung um eine Drehachse (2) verschwenkbaren Fördergutträger (27, 28) aufweisen, wobei die Fördergutträger (27, 28) jeweils durch Steuerkonturauslenkung zwischen einem eine Steuerkontur aufweisenden Entladesteuerkonturelement (32, 33) und einem mit der Steuerkontur des Entladesteuerkonturelementes (32, 33) in Kontakt tretenden Enladesteuerkonturgegenelement (42) in die Entladestellung verschwenkbar sind, wobei von den beiden Elementen Entladesteuerkonturelement (32, 33) und Entladesteuerkonturgegenelement (42) eines an dem jeweiligen Fördergutträger (27, 28)- und das andere an einem Entladeschalter (44, 45) angeordnet ist, welcher an einer Entladestelle der Förderstrecke vorgesehen- und zwischen einer inaktiven Stellung und einer aktiven Stellung schaltbar ist, wobei in der aktiven Stellung des Entladeschalters (44, 45) die Steuerkonturauslenkung zwischen dem Fördergutträger (27, 28) eines die Entladestelle durchlaufenden Fördergutmitnehmers (1) und dem Entladeschalter (44, 45) stattfinden kann, und wobei die Fördergutmitnehmer (1) jeweils eine den zugehörigen Fördergutträger (27, 28) in einer bestimmten Stellung, insbesondere in der Transportstellung, bedarfsweise lösbar sichernde Verriegelungseinrichtung (21-26,31) aufweisen, und wobei die Sortieranlage eine Rückstelleinrichtung (60) zum Zurückstellen eines zum Entladen seines Fördergutmitnehmers (1) in die Entladestellung überführten Fördergutträgers (27, 28) in die Transportstellung aufweist,
**dadurch gekennzeichnet,**
**dass** die Verriegelung der Fördergutträger (27, 28) jeweils durch Steuerkonturauslenkung zwischen einem eine Steuerkontur aufweisenden Entriegelungssteuerkonturelement (41) und einem mit der Steuerkontur des Entriegelungssteuerkonturelementes (41) in Kontakt tretenden Entriegelungssteuerkonturgegenelement (25) lösbar ist, wobei von den beiden Elementen Entriegelungssteuerkonturelement (41) und Entriegelungssteuerkonturgegenelement (25) eines an der Verriegelungseinrichtung (21-26,31) des jeweiligen Fördergutmitnehmers (1)- und das andere an einem Entriegelungsschalter (44, 45) angeordnet ist, welcher an der Entladestelle der Förderstrecke vorgesehen- und zwischen einer inaktiven Stellung und einer aktiven Stellung schaltbar ist, wobei in der aktiven Stellung des Entriegelungsschalters (44, 45) die Steuerkonturauslenkung zwischen der Verriegelungseinrichtung (21-26,31) eines die Entladestelle durchlaufenden Fördergutmitnehmers (1) und dem Entriegelungsschalter (44, 45) stattfinden kann.

2. Sortieranlage nach Anspruch 1, **dadurch gekennzeichnet, dass** der Entladeschalter und der Entriegelungsschalter gemeinsam schaltbar gekoppelt, insbesondere zu einer Schalteinheit (44, 45) zusammengefasst sind.

3. Sortieranlage nach einem der vorhergehenden Ansprüche, **dadurch gekennzeichnet, dass** die Fördergutmitnehmer (1) ein jeweiliges Entladesteuerkonturelement (32, 33) aufweisen und der Entladeschalter das Entladesteuerkonturgegenelement (42) umfasst.

4. Sortieranlage nach einem der vorhergehenden Ansprüche, **dadurch gekennzeichnet, dass** die jeweilige Verriegelungseinrichtung (21-26,31) der Fördergutmitnehmer (1) ein Entriegelungssteuerkonturgegenelement (25) aufweist und der Entriegelungsschalter das Entriegelungssteuerkonturelement (41) umfasst.

5. Sortieranlage nach einem der Ansprüche 1 und 2, **dadurch gekennzeichnet, dass** die Fördergutmitnehmer ein jeweiliges Enladesteuerkonturgegenelement aufweisen und der Entladeschalter das Entladesteuerkonturelement umfasst.

6. Sortieranlage nach einem Anspruch 5, **dadurch gekennzeichnet, dass** die Fördergutmitnehmer ein jeweiliges Entriegelungssteuerkonturelement aufweisen und der Entriegelungsschalter das Entriegelungssteuerkonturgegenelement umfasst.

7. Sortieranlage nach einem der vorhergehenden Ansprüche, **dadurch gekennzeichnet, dass** das Enladesteuerkonturgegenelement (42) und das Entriegelungssteuerkonturgegenelement (25) als Rollen ausgebildet sind.

8. Sortieranlage nach einem der vorhergehenden Ansprüche, **dadurch gekennzeichnet, dass** das Entladesteuerkonturelement (32, 33) und das Entriegelungssteuerkonturelement (41) jeweils als Nockenkufe ausgebildet ist.

9. Sortieranlage nach einem der vorhergehenden Ansprüche, **dadurch gekennzeichnet, dass** der Entladeschalter und der Entriegelungsschalter (44, 45) durch Verschwenken um eine zur Förderrichtung parallele und von Gelenken (39) definierte Achse zwischen der inaktiven Stellung und der aktiven Stellung schwenkbar sind.

10. Sortieranlage nach einem der vorhergehenden Ansprüche, **dadurch gekennzeichnet, dass** die Verriegelungseinrichtung (21-26, 31) eines jeweiligen Fördergutmitnehmers (1) eine Raste (31) mit Rastausnehmungen (34, 35, 36) an dem Fördergutträger (27, 28)-sowie wenigstens eine relativ zum Gestell (3, 4, 5) des Fördergutmitnehmers (1) zwischen einer Verriegelungsstellung und einer Freigabestellung bewegbare, insbesondere um eine Achse (17) schwenkbare Riegelklappe (22, 23) mit einem Riegelelement (26), insbesondere in Form einer Rastrolle, aufweist, welches in der Verriegelungsstellung der Riegelklappe (22, 23) in eine jeweilige Rastausnehmung (34, 35, 36) der Raste (31) eingreift, um den Fördergutträger (27, 28) in der Transportstellung oder in der Entladestellung zu sichern, wobei die Rastverriegelung zwischen Riegelelement (26) und Raste (31) durch die Steuerkonturauslenkung zwischen der Verriegelungseinrichtung (21-26,31) und dem Entriegelungsschalter (44, 45) stattfindet, wenn der betreffende Fördergutmitnehmer (1) die Entladestelle durchläuft und der Entriegelungsschalter (44, 45) in die aktive Stellung geschaltet ist.

11. Sortieranlage nach Anspruch 10, **dadurch gekennzeichnet, dass** die Rastausnehmungen (34, 35, 36) nach unten hin offen sind und dass das Riegelelement (26) durch Verschwenken der Riegelklappe (22, 23) nach unten aus einer Rastausnehmung herausbewegbaroder nach oben in eine Rastausnehmung hineinbewegbar ist.

12. Sortieranlage nach Anspruch 10 oder 11, **dadurch gekennzeichnet, dass** die Riegelklappe (22, 23) mittels einer Feder, insbesondere Zugfeder (21), zur Verriegelungsstellung hin vorgespannt ist.

13. Sortieranlage nach einem der vorhergehenden Ansprüche, **dadurch gekennzeichnet, dass** der Fördergutträger (27, 28) relativ zu seiner Transportstellung wahlweise in jeweils eine von zwei einander entgegengesetzten Richtungen um die Drehachse (2) schwenkbar ist, um in eine der jeweiligen Schwenkrichtung entsprechende Entladestellung zu einer Seite der Förderstrecke oder zur anderen Seite der Förderstrecke hin zu gelangen.

14. Sortieranlage nach Anspruch 13, **dadurch gekennzeichnet, dass** für jede der beiden Schwenkrichtungen der Fördergutträger (27, 28) eine jeweilige zwischen aktiver und inaktiver Stellung schalbare Schalteinheit (44, 45) aus Entladeschalter und Entriegelungsschalter vorgesehen ist, um einen jeweiligen Fördergutträger (27, 28) durch Steuerkonturauslenkung zwischen der betreffenden Schalteinheit (44, 45) und dem Fördergutträger (27, 28) in die eine Entladestellung oder in die andere Entladestellung zu bewegen.

15. Sortieranlage nach einem der vorhergehenden Ansprüche, **dadurch gekennzeichnet, dass** die Rückstelleinrichtung (60) an einem Rückstellort der Förderstrecke wenigstens ein Rückstellsteuerkonturelement (50, 51) und wenigstens ein Entriegelungssteuerkonturelement (52, 53) aufweist, die mit den komplementären, insbesondere als Rollen ausgebildeten Steuerkonturgegenelementen (30, 25) an einem jeweiligen den Rückstellort der Förderstrecke durchlaufenden Fördergutmitnehmer (1) mit in Entladestellung befindlichem Fördergutträger (27, 28) in Eingriff treten können, um den Fördergutträger (27, 28) zu entriegeln und in die Transportstellung zu bewegen.

16. Sortieranlage Anspruch 15, **dadurch gekennzeichnet, dass** der Rückstellnocken (50, 51) eine steigende Rampe bildet und dass das Entriegelungssteuerkonturelement eine fallende Rampe bildet.

17. Sortieranlage nach einem der vorhergehenden Ansprüche, **dadurch gekennzeichnet, dass** ein Dämpfungselement (80) vorgesehen ist, welches eine Gegenkraft zur Auslenkung des Fördergutträgers aufbaut.
